# EUROPÄISCHE PATENTSCHRIFT

(11) **EP 3 221 612 B1**
(45) Veröffentlichungstag und Bekanntmachung des Hinweises auf die Patenterteilung: **15.09.2021**
(21) Anmeldenummer: 15770896.7
(22) Anmeldetag: 29.09.2015
(51) Int. Cl.: F16F 13/10, F16F 13/26

(54) **HYDROLAGER SOWIE KRAFTFAHRZEUG MIT EINEM DERARTIGEN HYDROLAGER**
HYDRAULIC MOUNT AND MOTOR VEHICLE COMPRISING A HYDRAULIC MOUNT OF THIS TYPE
PALIER HYDRAULIQUE ET VÉHICULE À MOTEUR ÉQUIPÉ D'UN TEL PALIER HYDRAULIQUE

(30) Priorität: 17.11.2014 DE 102014223406
(43) Veröffentlichungstag der Anmeldung: 27.09.2017
(73) Patentinhaber: ContiTech Vibration Control GmbH, 30165 Hannover (DE)
(72) Erfinder: UHRMEISTER, Bernhard, 30419 Hannover (DE); GENDERJAHN, Robert, 30625 Hannover (DE)
(74) Vertreter: Continental Corporation
(86) Internationale Anmeldenummer: PCT/EP2015/072302
(87) Internationale Veröffentlichungsnummer: WO 2016/078807

(56) Entgegenhaltungen:
- DE-A1-102011 118 971
- DE-T2- 69 300 371
- FR-A1- 2 774 734
- US-A1- 2011 042 872

## Beschreibung

Die Erfindung betrifft ein Hydrolager mit einer Tragfeder, einer von der Tragfeder zumindest teilweise umfassten Arbeitskammer, die mit einer Hydraulikflüssigkeit gefüllt ist, einer Ausgleichskammer, und einem zwischen der Arbeitskammer und der Ausgleichskammer ausgebildeten Drosselkanal zum Austausch von Hydraulikflüssigkeit.

Außerdem betrifft die Erfindung ein Kraftfahrzeug, das einen Fahrzeugrahmen, einen Motor und ein als Hydrolager ausgebildetes Motorlager umfasst, das eine lagernde Verbindung zwischen dem Motor und dem Fahrzeugrahmen herstellt.

Hydrolager, die auch als Hydrauliklager bezeichnet werden, sind aus dem Stand der Technik bekannt. Sie dienen zur elastischen Abstützung von Aggregaten, insbesondere von Kraftfahrzeugmotoren. Mit Hilfe derartiger, sich z. B. zwischen einem Motor und einem Chassis des Kraftfahrzeugs befindenden Hydrolagern soll verhindert werden, dass Vibrationen des Motors auf das Chassis übertragen werden, da die Vibrationen von einem Fahrgast des Kraftfahrzeugs oftmals als unangenehme Geräusche wahrgenommen werden.

Dabei ist der bekannte Konflikt in der Schwingungsisolation zu beachten, der darin besteht, dass das Hydrolager einerseits möglichst steif sein soll, um hohe Lasten bzw. Lagerkräfte aufnehmen zu können, und andererseits eine weiche Charakteristik aufweisen muss, um entstehende Schwingungen über einen möglichst breiten Frequenzbereich zu isolieren.

In ihrer Grundversion weisen derartige Hydrauliklager üblicherweise ein Gummielement als Tragfeder, die auch als Tragkörper bezeichnet wird, in Verbindung mit einem hydraulischen Dämpfer auf. Das Gummielement ist oft als Hohl-Konus ausgebildet. Die Tragfeder kann somit eine Mantelwandung der Arbeitskammer bilden. An der oberen, spitzen Stirnseite des Hohl-Konuses ist zumeist eine obere Abdeckung vorgesehen, an der ein Anschlusselement zur Befestigung des Motors angebracht ist. Das Anschlusselement ist für gewöhnlich ein Gewindebolzen, der mit dem Motor verschraubt werden kann. Dabei umfasst der hydraulische Dämpfer zumeist mindestens zwei Kammern, nämlich die genannte Arbeitskammer und eine Ausgleichskammer. In Längsrichtung des Hydrolagers ist die Ausgleichskammer für gewöhnlich unterhalb der Arbeitskammer angeordnet. Um die Arbeiterkammer und die Ausgleichskammer voneinander zu trennen, kann zwischen der Ausgleichskammer und der Arbeitskammer eine Trennwand angeordnet sein. Außerdem ist ein zwischen der Arbeitskammer und der Ausgleichkammer erstreckender Drosselkanal zum Austausch von Hydraulikflüssigkeit vorgesehen. Mittels des Drosselkanals ersteht deshalb eine hydraulische Kopplung zwischen der Arbeitskammer und der Ausgleichskammer. Vorzugsweise ist der Drosselkanal zumindest abschnittsweise von der Trennwand ausgebildet. Alternativ kann der Drosselkanal auch von der Trennwand getrennt ausgebildet sein. Vorzugsweise sind auch die Ausgleichskammer zumindest teilweise und der Drosselkanal mit Hydraulikflüssigkeit gefüllt. Als Hydraulikflüssigkeit wird vorzugsweise ein Gemisch aus Öl und Wasser oder ein Fluid mit Glykol eingesetzt.

Bei einer Belastung des Hydrolagers wirkt eine Kraft in Längsrichtung des Hydrolagers auf die Tragfeder, so dass sich diese elastisch verformt. Diese Verformung wird auch als Einfedern der Tragfeder bezeichnet. Die Arbeitskammer ist von der Tragfeder zumindest teilweise umfasst, so dass die Arbeitskammer durch das Einfedern der Tragfeder verkleinert wird. Damit steigt der Druck in der Arbeitskammer an, woraufhin ein Teil der Hydraulikflüssigkeit aus der Arbeitskammer durch den Drosselkanal in die Ausgleichskammer strömt. Für die strömende Hydraulikflüssigkeit stellt der Drosselkanal einen Strömungswiderstand dar. Das Durchströmen des entsprechend ausgebildeten Drosselkanals erzeugt deshalb Dissipation und somit Dämpfungsarbeit.

Die Ausgleichskammer ist bevorzugt mit mindestens einem membranartig verformbaren Wandungsteil, insbesondere einer Rollmembran, versehen, so dass der in die Ausgleichskammer einströmende Teil der Hydraulikflüssigkeit aufgenommen werden kann.

Ein derartiges Hydrolager ist beispielsweise aus dem Dokument DE 693 00 371 T2 bekannt.

Die Dämpfungseigenschaften solcher Hydrolager sind aufgrund ihrer Bauweise frequenzabhängig. Statische oder quasistatische Belastungen unterhalb einer Frequenz von 5 Hz werden üblicherweise von der Tragfeder aufgenommen, die eine relativ große Steifheit aufweist.

Niederfrequente Schwingungen, d.h. Schwingungen mit Frequenzen von ca. 5 bis 20 Hz, die im Allgemeinen mit großen Amplituden auftreten, werden durch das Zusammenwirken der Arbeitskammer und der Ausgleichskammer über den Drosselkanal gedämpft. Die Dämpfung entsteht dabei mit dem Strömen von zumindest einem Teil der Hydraulikflüssigkeit aus der Arbeitskammer durch den Drosselkanal in die Ausgleichskammer, und umgekehrt, wobei eine entsprechende Dämpfungsarbeit geleistet wird.

Hochfrequente Schwingungen, also Schwingungen im Frequenzbereich von 20 Hz bis beispielsweise 50 Hz, 100 Hz oder 200 Hz, werden aufgrund der Trägheit, Viskosität und Inkompressibilität der Hydraulikflüssigkeit und/oder der hohen Steifigkeit und Trägheit der Tragfeder nur sehr gering gedämpft oder sogar nahezu ungedämpft übertragen. Diese Schwingungen treten zwar im Allgemeinen nur mit kleinen Amplituden auf, sind aber aufgrund ihrer akustischen Wirkung von höherer Bedeutung.

Zur besseren Isolation solcher Schwingungen kann die Trennwand zwischen der Arbeitskammer und der Ausgleichskammer teilweise flexibel oder mit einem Freiweg ausgebildet werden. Eine solche Lösung wird jedoch vielen Isolierungsanforderungen, insbesondere hinsichtlich der stetig steigenden Komfortanforderungen bei Kraftfahrzeugen, nicht gerecht. Denn eine erhöhte Nachgiebigkeit der Trennwand verringert die dynamische Steifigkeit des Hydrolagers auch bei niedrigen Frequenzen. Dies kann eine verringerte Dämpfung für den entsprechenden Frequenzbereich zur Folge haben. Es wird auch von einem so genannten Dämpfungsverlust gesprochen.

Im Hinblick auf ein verbessertes Isolieren der hochfrequenten Schwingungen werden oftmals sogenannte aktiv gesteuerte Hydrolager eingesetzt, die jeweils einen Aktor, der auch als Aktuator bezeichnet wird, aufweisen. Bezüglich einer grundlegenden Wirkungsweise eines Aktors wird auf die Druckschrift DE 198 39 464 C2 verwiesen.

Für ein aus dem Stand der Technik bekanntes Hydrolager ist ein Anker des Aktors mechanisch mit einer Steuermembran verbunden, die vorzugsweise der Trennwand zugeordnet ist. Somit ist die Steuermembran zur Veränderung des Arbeitskammervolumens ausgebildet. Die Steuermembran kann dabei durch einen flexiblen Teil der Trennwand gebildet sein. Es ist aber auch möglich, dass die Steuermembran in einer Öffnung der Trennwand stoffschlüssig befestigt ist, wobei der Randbereich der Trennwand elastisch ausgebildet ist, um mit der restlichen Steuermembran eine Hubbewegung ausführen zu können. Die Steuermembran kann also in ihrer Normalenrichtung elastisch verformt werden. Indem der Anker mechanisch an die Steuermembran gekoppelt ist, kann die Steuermembran mit dem Aktor in ihrer Normalenrichtung gesteuert verformt werden.

Mit dem elastischen Verformen der Steuermembran in ihrer Normalenrichtung verändern sich das Hydraulikvolumen der Arbeitskammer und/oder der Druck in der Arbeitskammer. Dies gilt insbesondere dann, wenn die Steuermembran einen Teil der Trennwand zu der Arbeitskammer bildet. Deshalb dient der Aktor auch zur Steuerung des Hydraulikvolumens der Arbeitskammer und/oder des Drucks der Arbeitskammer.

Wird das Hydrolager zur Lagerung eines Motors eines Kraftfahrzeuges eingesetzt, so können Sensoren des Kraftfahrzeugs eingesetzt werden, um die vom Motor ausgehenden Schwingungen in einem möglichst nur sehr gedämpften Maß an einen Innenraum zu übertragen oder die Schwingungen des Motors sogar vollständig zu entkoppeln. Hierzu kann beispielsweise ein Sensor vorgesehen sein, der Schwingungen des Motors oder des Chassis messen kann. Alternativ können auch mehrere Sensoren an unterschiedlichen Orten des Motors und/oder des Chassis vorgesehen sein.

Werden von dem Sensor zur Messung der Schwingungen des Chassis hochfrequente Schwingungen erfasst, kann die Steuermembran von dem Aktor synchron ausgelenkt werden. Die Richtung der Auslenkung kann dabei durch die Bauart des Hydrolagers bestimmt sein. Die Schwingungen des Motors verursachen entsprechende hochfrequente Druckschwankungen in der Hydraulikflüssigkeit der Arbeitskammer. Mit der synchronen Auslenkung der Steuermembran werden diese hochfrequenten Druckschwankungen möglichst vollständig ausgeglichen. Bestenfalls kommt es somit zu einer Kompensation, so dass diese hochfrequenten Schwingungen nicht von dem Hydrolager übertragen werden. Entsprechend hochfrequente Schwingungen verursachen deshalb im Innenraum des Kraftfahrzeugs keine oder nur sehr geringe Geräuschemissionen.

Durch die erläuterte Ansteuerung des Aktors und des entsprechenden Einwirkens auf die Steuermembran soll also eine Absenkung der dynamischen Federrate im Bereich der hochfrequenten Schwingungen bewirkt werden. Mit anderen Worten soll das Hydrolager für hochfrequente Schwingungen "weich" geschaltet werden. Bei niederfrequenten Schwingungen oder quasistatischen Belastungen des Hydrolagers wird die Steuermembran nicht aktiv angesteuert. Erhöht sich nun der Druck in der Arbeitskammer, kann die Steuermembran nachgeben, in dem sie durch die Hydraulikflüssigkeit aus der Arbeitskammer ausgelenkt wird. Im passiven Betrieb gibt die Steuermembran einem Druck aus der Arbeitskammer also nach. Aufgrund der Nachgiebigkeit der Steuermembran und ihrer hydraulischen Verbindung zu der Arbeitskammer verringert die Steuermembran die dynamische Steifigkeit des Hydrolagers. Für niederfrequente Schwingungen und/oder quasistatische Belastungen verschlechtert die Steuermembran die gewünschte Dämpfung aufgrund ihrer geringen Steifigkeit, und zwar zumindest im Randbereich. Es wird auch von einem sogenannten Dämpfungsverlust gesprochen. Teilweise wurden Versuche unternommen, diesen Dämpfungsverlust auszugleichen, indem die Steifigkeit insbesondere im Randbereich der Steuermembran erhöht wurde. Dies hat jedoch einen negativen Einfluss auf das Isolationsverhalten im höherfrequenten Bereich, insbesondere zwischen 20 Hz und 200 Hz. Außerdem vergrößert sich der für das Hydrolager notwendige Bauraum, wenn die Steifigkeit der Steuermembran erhöht werden sollte, da der Aktor entsprechend größer dimensioniert werden muss, um die entsprechend größeren Kräfte für die steifere Steuermembran zu überwinden.

Der Erfindung liegt deshalb die Aufgabe zu Grunde, ein Hydrolager bereitzustellen, bei dem die genannten Nachteile verhindert oder verringert werden. Vorzugsweise sollte das Hydrolager dazu ausgebildet sein, für quasistatische Belastungen und im niederfrequenten Schwingungsbereich eine möglichst gute Dämpfung sowie im höherfrequenten Schwingungsbereich eine möglichst gute Isolation zu bieten. Dabei ist es weiter bevorzugt, dass das Hydrolager eine möglichst kompakte Bauform aufweist.

Gemäß einem ersten Aspekt wird die Aufgabe gelöst durch das erfindungsgemäße Hydrolager mit einer Tragfeder, einer von der Tragfeder zumindest teilweise umfassten Arbeitskammer, die mit einer Hydraulikflüssigkeit gefüllt ist, einer Ausgleichskammer, und einem zwischen der Arbeitskammer und der Ausgleichskammer ausgebildeten Drosselkanal zum Austausch von Hydraulikflüssigkeit, wobei das Hydrolager weiter aufweist: eine Druckkammer, einen sich zwischen der Druckkammer und der Arbeitskammer erstreckenden Zylinderkanal, einen in den Zylinderkanal eingesetzten Steuerkolben, der in dem Zylinderkanal in einer zugehörigen Zylinderlängsrichtung gleitend verschiebbar ist, und einen Aktor zum gesteuerten Auslenken des Steuerkolbens in Zylinderlängsrichtung.

Der Erfindung liegt dabei der Gedanke zu Grunde, den Einfluss der aus dem Stand der Technik bekannten Nachgiebigkeit der Steuermembran auf die dynamische Steifigkeit des Hydrolagers bei niederfrequenten Schwingungen und/oder bei quasistatischen Belastungen zu verringern, ohne den Bauraum des Hydrolager deutlich zu vergrößern. Eine ausschließliche Veränderung der Steifigkeit der bekannten Steuermembran führt jedoch nicht zu dem gewünschten Ergebnis. Denn die bekannte Steuermembran ist stoffschlüssig mit der Trennwand oder einem anderen Teil des Hydrolagers verbunden. Um das Volumen der Arbeitskammer zu verändern, ist eine elastische Verformung der Steuermembran notwendig. Die Vergrößerung der Steifigkeit der Steuermembran führt also zur Vergrößerung des Aktors, damit eine gewünschte, dynamische Anregung der Steuermembran erreichbar bleibt. Die Vergrößerung des Aktors führt sodann zu einer Vergrößerung des Bauraums des Hydrolagers, was zu vermeiden ist.

Erfindungsgemäß wird deshalb von einer Verwendung einer Steuermembran abgesehen. Anstatt dessen wird eine Zylinder-Kolben-Anordnung vorgesehen. Ein Kolben kann nämlich in Längsrichtung eines Zylinders bewegt werden, ohne dass Rückstellkräfte nur aufgrund der Bewegung des Kolbens entstehen. Denn weder der Zylinder noch der Kolben werden durch die Bewegung des Kolbens derart elastisch verformt, dass Rückstellkräfte entstehen, die zu einer elastischen Verformung der Steuermembran in ihrer Normalenrichtung korrespondieren.

Für das erfindungsgemäße Hydrolager ist eine Druckkammer vorgesehen. Die Druckkammer kann mit einem kompressiblen Medium, wie beispielsweise Luft, und/oder einer Hydraulikflüssigkeit gefüllt sein. Zusätzlich zu der Arbeitskammer und der Ausgleichskammer umfasst das Hydrolager also die weitere Druckkammer. Zwischen der Druckkammer und der Arbeitskammer erstreckt sich ein Zylinderkanal. Die Druckkammer ist deshalb pneumatisch und/oder hydraulisch mit dem Zylinderkanal verbunden. Entsprechendes gilt für die Arbeitskammer. Sie ist pneumatisch und/oder hydraulisch mit dem Zylinderkanal verbunden. Um das Medium in der Arbeitskammer von dem Medium in der Druckkammer zu trennen, ist in den Zylinderkanal ein Steuerkolben eingesetzt. Der Steuerkolben dient darüber hinaus zur Veränderung eines Volumens und/oder des Drucks in der Arbeitskammer und/oder der Druckkammer. Dazu ist der Steuerkolben in einer Zylinderlängsrichtung des Zylinderkanals gleitend verschiebbar ausgebildet. Wird der Steuerkolben in dem Zylinderkanal in Richtung der Druckkammer verschoben, so erhöht sich der Druck in der Druckkammer und/oder verkleinert sich das Volumen der Druckkammer. Gleichzeitig verursacht die Verschiebung des Zylinderkolbens eine Verringerung des Drucks in der Arbeitskammer und/oder eine Vergrößerung des Volumens der Arbeitskammer. Der Zylinderkolben kann deshalb in analoger Weise zu der Steuermembran zur Isolation von hochfrequenten Schwingungen des Hydrolagers eingesetzt werden. Dazu ist für das Hydrolager ein Aktor zum gesteuerten Auslenken des Steuerkolbens in Zylinderlängsrichtung des Zylinderkanals vorgesehen.

Indem der Steuerkolben nicht stoffschlüssig an dem Zylinderkanal befestigt ist, sondern gleitend in dem Zylinderkanal verschiebbar ist, kann die Steifigkeit des Steuerkolben beliebig erhöht werden, ohne die Vergrößerung des Aktors zu verursachen. Bevorzugt ist der Steuerkolben aus Metall und/oder aus einem hochfesten Kunststoff. Insbesondere ist der Steuerkolben starr ausgebildet. Weist der Steuerkolben nun eine besonders hohe Steifigkeit auf, wird der Steuerkolben bei einer quasistatischen Belastung sowie bei niederfrequenten Schwingungen allenfalls kaum elastisch verformt. Der Steuerkolben hat deshalb fast keinen negativen Einfluss auf die dynamische Steifigkeit des Hydrolagers. Mit anderen Worten verbessert der Steuerkolben die dynamische Steifigkeit des Hydrolagers.

Bei dem Aktor handelt es sich insbesondere um einen elektromagnetischen Linearaktor und vorzugsweise um einen Reluktanz-Linearaktor. Grundsätzlich können jedoch auch andere Aktoren, insbesondere andere elektrische Aktoren, eingesetzt werden. Als besonders zweckmäßig haben sich Aktoren herausgestellt, die jeweils einen Stator und einen Anker umfassen. Der Anker ist dabei beweglich gelagert zu dem Stator ausgebildet, so dass der Anker gegenüber dem Stator in Längsrichtung des Aktors ausgelenkt werden kann. Der Anker und der Steuerkolben können mechanisch miteinander verbunden und/oder gekoppelt sein. Dabei kann es vorgesehen sein, dass der Anker nicht unmittelbar mit dem Steuerkolben verbunden ist, sondern dass beispielsweise ein Gelenkmechanismus und/oder ein Stößel vorgesehen sind, die zwischen dem Anker und der Steuermembran angeordnet sind, um Bewegungen und/oder Kräfte vom Anker auf den Steuerkolben zu übertragen. Ein derartiger Gelenkmechanismus und/oder Stößel sind sodann dem Aktor zugeordnet.

Eine bevorzugte Ausgestaltung des Hydrolagers zeichnet sich dadurch aus, dass der Zylinderkanal radial innenseitig eine Zylindergleitfläche aufweist, auf der der Steuerkolben in Zylinderlängsrichtung des Zylinderkanals gleiten kann. Vorzugsweise bildet der Zylinderkanal einen Hohlzylinder. Mit einer entsprechenden stirnseitigen Öffnung ist der Zylinderkanal sodann zu der Druckkammer hin geöffnet. Mit der gegenüberliegenden, stirnseitigen Öffnung ist der Zylinderkanal zu der Druckkammer hin geöffnet. Die Zylindergleitfläche des Zylinderkanals kann sich deshalb zwischen den beiden Öffnungen des Zylinderkanals erstrecken. Somit kann der Steuerkolben einen Hub ausführen, der der Längserstreckung der Zylindergleitfläche bzw. einem Abstand der beiden Öffnungen entspricht. Die Zylindergleitfläche weist vorzugsweise eine geringere Rauigkeit auf, so dass ein Reibwiderstand bei einem Schieben des Steuerkolbens auf der Zylindergleitfläche besonders gering ausfällt. Damit kann eine Aktorleistung verringert und der Aktor als solches besonders kompakt ausgestaltet werden. Korrespondierend kann das Hydrolager insgesamt einen kleineren Bauraum aufweisen. Weiterhin vorteilhaft weist der Steuerkolben radial außenseitig mindestens einen Gleitabschnitt auf, mit dem der Steuerkolben gleitend auf der Zylindergleitfläche des Zylinderkanals gleitend verschiebbar ist. Dies verringert die Reibung zwischen dem Steuerkolben und dem Zylinderkanal weiter. Entsprechende Verbesserungen und Effekte können deshalb erreicht werden.

Eine weitere bevorzugte Ausgestaltung des Hydrolagers zeichnet sich dadurch aus, dass die Druckkammer mit Hydraulikflüssigkeit gefüllt ist. Somit sind sowohl die Druckkammer als auch die Arbeitskammer mit Hydraulikflüssigkeit, insbesondere der gleichen Hydraulikflüssigkeit, gefüllt. Korrespondierend ist es besonders bevorzugt vorgesehen, dass auch der Zylinderkanal eine Hydraulikflüssigkeit-Füllung aufweist. Indem der Steuerkolben zu einer Zylinderlängsrichtung in Kontakt mit der Hydraulikflüssigkeit aus der Druckkammer und zu der gegenüberliegenden Zylinderlängsrichtung in Kontakt mit der Hydraulikflüssigkeit aus der Arbeitskammer ist, wird eine Schmierung zwischen dem Steuerkolben und dem Zylinderkanal effektiv gewährleistet. Dies bietet eine besonders hohe Lebensdauer des Hydrolagers. Außerdem hat es sich in der Praxis als vorteilhaft erwiesen, für die Kammern das gleiche Medium, nämlich eine Hydraulikflüssigkeit, als Füllung vorzusehen. Indem die Druckkammer mit Hydraulikflüssigkeit gefüllt ist, ist ihre Komprimierungseigenschaft zumindest im Wesentlichen temperaturunabhäng. Dies erhöht die Linearität des Hydrolagers, was die Steuerbarkeit und somit das Isolationsverhalten für hochfrequente Schwingungen verbessert.

Eine weitere bevorzugte Ausgestaltung des Hydrolagers zeichnet sich dadurch aus, dass zwischen einem radial außenseitigen Mantel des Steuerkolbens und der Zylindergleitfläche des Zylinderkanals ein Spalt, insbesondere ein Ringspalt, ausgebildet ist. Durch den Spalt dichtet die Steuerkolben-Zylinderkanal-Anordnung die Arbeitskammer nicht vollständig gegenüber der Druckkammer ab. Sofern der Spalt als Ringspalt ausgebildet ist, ist der Reibwiderstand bei einer Verschiebung des Steuerkolbens in dem Zylinderkanal besonders gering. Denn der Steuerkolben liegt allenfalls mit einer geringen Kraft auf dem Zylinderkanal auf. Darüber hinaus kann der Spalt zum Überströmen von Hydraulikflüssigkeit aus der Druckkammer in die Arbeitskammer, oder umgekehrt, dienen, wenn der Steuerkolben in Zylinderlängsrichtung in dem Zylinderkanal verschoben wird. Der Spalt wird deshalb auch als Überströmspalt bezeichnet.

Eine weitere bevorzugte Ausgestaltung des Hydrolagers zeichnet sich dadurch aus, dass der Steuerkolben und der Zylinderkanal ein dichtendes Gleitlager bilden. An der Grenzfläche zwischen dem Steuerkolben und dem Zylinderkanal, insbesondere der zugehörigen Zylindergleitfläche, bildet sich dann eine Gleitdichtung. Mit anderen Worten wird mittels des Steuerkolbens und des Zylinderkanals ein Medium in der Druckkammer, insbesondere eine Hydraulikflüssigkeit oder ein Arbeitsgas, wie die Luft, von der Hydraulikflüssigkeit in der Arbeitskammer getrennt. Für die beiden Kammern können deshalb unterschiedliche Medien vorgesehen sein, ohne dass es zu einer Vermischung während des Betriebs des Hydrolagers kommt. Dies gewährleistet einen sicheren Betrieb. Darüber hinaus kann ein bestimmter Druck in der Druckkammer auch über einen längeren Zeitraum gehalten werden, denn durch die genannte Gleitdichtung kann das Medium aus der Druckkammer nicht in die Arbeitskammer, oder umgekehrt, entweichen. Die Einstellung des Drucks in der Druckkammer hat sich für bestimmte Anwendungen in der Praxis als vorteilhaft erwiesen. Insbesondere kann mit der Einstellung des Drucks und/oder eines Mindestdrucks in der Druckkammer die dynamische Steifigkeit des Hydrolagers beeinflusst werden.

Eine weitere bevorzugte Ausgestaltung des Hydrolagers zeichnet sich dadurch aus, dass eine Pufferkammer und ein zwischen der Druckkammer und der Pufferkammer ausgebildeter Ausgleichskanal zum Austausch von Hydraulikflüssigkeit vorgesehen sind. Bevorzugt ist die Druckkammer mit Hydraulikflüssigkeit gefüllt. Um nun den Steuerkolben in Zylinderlängsrichtung zu verschieben, insbesondere wenn der Steuerkolben und der Zylinderkanal ein dichtendes Gleitlager bilden, kann ein Herausströmen von Hydraulikflüssigkeit aus der Druckkammer notwendig werden. Hierzu ist der Ausgleichskanal vorgesehen. Um die herausströmende Hydraulikflüssigkeit aus der Druckkammer aufzufangen, ist die Pufferkammer vorgesehen. Damit strömt die Hydraulikflüssigkeit aus der Druckkammer durch den Ausgleichskanal in die Pufferkammer, oder umgekehrt, wenn der Steuerkolben in der Zylinderlängsrichtung des Zylinderkanals bewegt wird. Vorzugsweise sind die Länge und/oder der Querschnitt des Ausgleichskanals ausgestaltet, um für die Hydraulikflüssigkeit einen Strömungswiderstand zu bilden. Mit der durch den Ausgleichskanal strömenden Hydraulikflüssigkeit entstehen deshalb Dissipation und eine korrespondierende Dämpfungsarbeit. Damit wirken auf den Steuerkolben entsprechende Reaktionskräfte. Indem die Druckkammer mit Hydraulikflüssigkeit gefüllt ist, welche bei einer Verschiebung des Steuerkolbens durch den Ausgleichskanal strömt, wird durch den Zylinderkanal, den Steuerkolben, die Druckkammer und den Ausgleichskanal ein zumindest im Wesentlichen lineares System geschaffen. Dies bietet eine besonders gute Steuerbarkeit des Hydrolagers, insbesondere zur Isolation von hochfrequenten Schwingungen. Sofern der Steuerkolben für eine bestimmte Zeit nicht verschoben wird, stellt sich in der Druckkammer ein Ausgangszustand ein. In dem Ausgangszustand ist die Druckkammer vorzugsweise zumindest im Wesentlichen drucklos. Somit kann der Steuerkolben an einem beliebigen Bereich des Zylinderkanals betrieben werden, um die hochfrequenten Schwingungen zu isolieren. Mit anderen Worten muss für den Betrieb des Steuerkolben nicht sichergestellt werden, dass der Steuerkolben für einen Betriebsstart immer an der gleichen Stelle ist.

Eine weitere bevorzugte Ausgestaltung des Hydrolagers zeichnet sich dadurch aus, dass die Pufferkammer von der Ausgleichskammer gebildet ist. Zwar kann die Pufferkammer separat ausgebildet sein. In der Praxis hat es sich jedoch als vorteilhaft erwiesen, wenn die Pufferkammer von der Ausgleichskammer gebildet ist. In diesem Fall ist der Ausgleichskanal zwischen der Druckkammer und der Ausgleichskammer ausgebildet, was beide Kammern hydraulisch miteinander koppelt. Das Hydrolager kann sodann besonders kompakt ausgestaltet werden. Außerdem erleichtert es die Herstellung, was darüber hinaus die Herstellungskosten des Hydrolagers senkt.

Eine weitere bevorzugte Ausgestaltung des Hydrolagers zeichnet sich dadurch aus, dass das Hydrolager einen der Arbeitskammer zugeordneten Steuerkanal aufweist, der zu einem von der Druckkammer abgewandten Ende des Zylinderkanals führt. Je nach Bauweise des Hydrolagers kann es vorgesehen sein, dass die Arbeitskammer die Druckkammer teilweise umgibt und/oder dass die Arbeitskammer und die Druckkammer voneinander entfernt ausgebildet sind. Um nun die hydraulische Kopplung zwischen der Druckkammer und der Arbeitskammer zu gewährleisten, ist der Steuerkanal vorgesehen, mit dem sich die Arbeitskammer bis zu dem Zylinderkanal erstreckt. Damit können Reaktionskräfte zwischen dem Steuerkolben und der Hydraulikflüssigkeit aus der Arbeitskammer ausgetauscht werden, was die gewünschte Kopplung der Arbeitskammer mit der Druckkammer sicherstellt.

Gemäß einem weiteren Aspekt wird die eingangs genannte Aufgabe außerdem durch ein Kraftfahrzeug gelöst, das einen Fahrzeugrahmen, einen Motor und ein Motorlager umfasst, das eine lagernde Verbindung zwischen dem Motor und dem Fahrzeugrahmen herstellt, wobei das Motorlager durch ein erfindungsgemäßes Hydrolager ausgebildet ist. Dabei gelten Merkmale, Details und Vorteile, die im Zusammenhang mit dem erfindungsgemäßen Hydrolager beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von einem Ausführungsbeispiel unter Bezugnahme auf die Zeichnung beschrieben. In der Zeichnung zeigt:

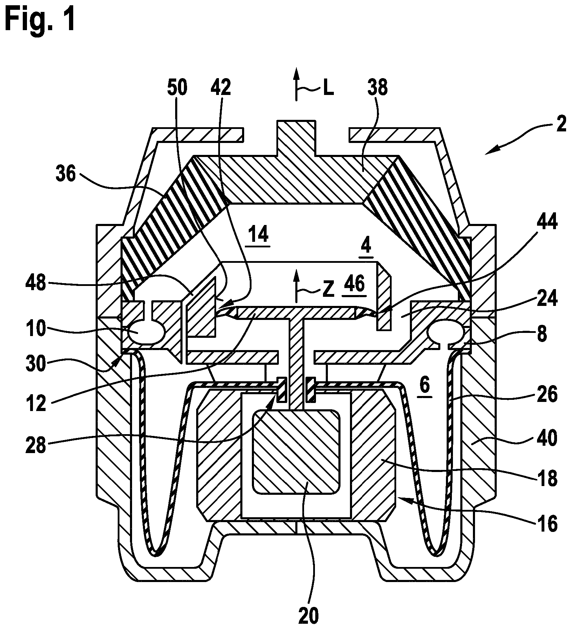

- Fig. 1: eine schematische Querschnittsansicht des Hydrolagers.

Aus der Figur 1 ist ein erfindungsgemäßes Hydrolager 2 zu erkennen. Das Hydrolager 2 umfasst eine als Gummielement ausgestaltete Tragfeder 36. Diese Tragfeder 36 ist für gewöhnlich als Hohlkörper ausgebildet, wobei die Oberseite der Tragfeder 36 eine Abdeckung 38 aufweist. An der Abdeckung 38 ist zumeist ein Anschlusselement zur Befestigung eines Motors angebracht. In einer einfachen Ausgestaltung handelt es sich bei dem Anschlusselement um einen Gewindebolzen, der mit dem Motor verschraubt werden kann. An der Unterseite der Tragfeder 36 schließt die Trennwand 8 an. Zwischen der Tragfeder 36, der Abdeckung 38 und der Trennwand 8 bildet sich die Arbeitskammer 4 aus. Die Arbeitskammer 4 ist mit einer Hydraulikflüssigkeit gefüllt. Hierbei handelt es sich vorzugsweise um ein Gemisch aus Öl und Wasser. In Längsrichtung L unterhalb der Trennwand 8 schließt das hohlzylindrische Basisgehäuse 40 an. In das Basisgehäuse 40 ist die erste Rollmembran 26 eingebracht, die aus elastischem Material hergestellt ist. Durch ihre Ringform bildet die erste Rollmembran 26 mit ihrer radial innenseitigen Kante 28 eine Dichtung an dem Ankerstößel des Linearaktors 16 aus und ist mit ihrer radial außenseitigen Kante 30 an der Unterseite der Trennwand 8 befestigt.

Der von der Trennwand 8, der ersten Rollmembran 26 und dem Ankerstößel eingeschlossene Raum bildet die Ausgleichskammer 6 des Hydrolagers 2. Die Ausgleichskammer 6 ist mit Hydraulikflüssigkeit gefüllt, die vorzugsweise ein Gemisch aus Öl und Wasser ist. Aus der Figur 1 ist somit zu entnehmen, dass die Trennwand 8 zwischen der Arbeitskammer 4 und der Ausgleichskammer 6 angeordnet ist.

Zur Dämpfung von Schwingungen, die von dem Motor über die Abdeckung 38 auf die Tragfeder 36 und somit auch auf ein Arbeitskammervolumen 14 der Arbeitskammer 4 wirken, ist ein zwischen der Arbeitskammer 4 und der Ausgleichskammer 6 ausgebildeter erster Drosselkanal 10 vorgesehen, der zum Austausch von Hydraulikflüssigkeit dient. Wie in Fig. 1 dargestellt, wird der Drosselkanal 10 zumindest teilweise von der Trennwand 8 gebildet oder ist in diese eingefasst. Der Drosselkanal 10 ist zumindest teilringförmig, wobei sich der Drosselkanal 10 mit einer Öffnung an dem einen Ringende zu der Arbeitskammer 4 und mit einer weiteren Öffnung an dem anderen Ringende zu der Ausgleichskammer 6 öffnet.

Wird die Tragfeder 36 durch Schwingungen gestaucht, führt dies zumeist zu einer Erhöhung des Drucks der Hydraulikflüssigkeit in der Arbeitskammer 4 und/oder zu einer Verkleinerung des Arbeitskammervolumens 14 der Arbeitskammer 4. In beiden Fällen erfolgt ein Volumenstrom der Hydraulikflüssigkeit aus der Arbeitskammer 4 durch den Drosselkanal 10 in die Ausgleichskammer 6. Der Drosselkanal 10 weist einen derart kleinen Durchmesser und/oder große Länge auf, dass Dissipation bzw. Dämpfungsarbeit entsteht, welche die auf die Tragfeder 36 einwirkenden Schwingungen dämpft. Die Dämpfung mittels des Drosselkanals 10 ist jedoch nur für niederfrequentierte Schwingungen effektiv. Bei höherfrequenten Schwingungen, so beispielsweise ab 20 Hz, werden Schwingungen durch den Drosselkanal 10 nur gering gedämpft oder verhindert.

Zur Isolierung von Schwingungen mit einer Frequenz von mehr als 20 Hz weist das Hydrolager 2 einen Steuerkolben 12 auf, der in Fluidverbindung mit der Arbeitskammer 4 ausgebildet ist. Dazu ist ein Steuerkanal 24 vorgesehen, der eine hydraulische Verbindung zu einen Zylinderkanal 42 herstellt. In den Zylinderkanal 42 ist der Steuerkolben 12 eingesetzt. Dabei bildet sich zwischen dem Steuerkolben 12 und dem Zylinderkanal 42 eine dichtende Gleitlagerung 44 aus. Der Zylinderkanal 42 erstreckt sich von der Arbeitskammer 4 bis zu einer Druckkammer 46. Die Druckkammer 46 ist ebenfalls mit Hydraulikflüssigkeit gefüllt. Durch die dichtende Gleitlagerung 44 findet mittels des Zylinderkanals 42 kein unmittelbarer Austausch von Hydraulikflüssigkeit zwischen der Arbeitskammer 4 und der Druckkammer 46 statt. Für eine Druckveränderung in der Druckkammer 46 wird deshalb eine gleitendende Verschiebung des Steuerkolbens 12 in Zylinderlängsrichtung Z des Zylinderkanals 42 notwendig. Die Hydraulikflüssigkeit in der Druckkammer 46 ist bevorzugt nicht komprimierbar. Deshalb ist ein Ausgleichskanal 48 vorgesehen, der sich zwischen der Druckkammer 46 und der Ausgleichskammer 6 erstreckt. Der Ausgleichskanal 48 verbindet die Druckkammer 46 deshalb hydraulisch mit der Ausgleichskammer 6. Der Ausgleichskanal 48 ist in seiner Länge und/oder seinem Querschnitt derart ausgestaltet, dass dieser einen Strömungswiderstand für Hydraulikflüssigkeit bildet. Wird der Steuerkolben 12 nun in Zylinderlängsrichtung Z gleitend verschoben, verändert sich der Druck in der Druckkammer, so dass Hydraulikflüssigkeit aus der Druckkammer 46 durch den Ausgleichskanal 48 in die Ausgleichskammer 6 strömt, oder umgekehrt. Aufgrund des Strömungswiderstands des Ausgleichskanals 48 entsteht Dissipation und Dämpfungsarbeit, die eine entsprechende Reaktionskraft an dem Steuerkolben 12 hervorruft. Dieses Verhalten wird sodann im Betrieb genutzt, um niederfrequente Schwingungen besonders gut dämpfen zu können.

Der Steuerkolben 12 ist, wie aus Figur 1 ersichtlich, zwischen dem der Arbeitskammer 4 zugeordneten Steuerkanal 24 und einer Druckkammer 46 angeordnet. Der Steuerkanal 24 erstreckt sich deshalb in Längsrichtung L bis in einen Raum zwischen der Trennwand 8 und dem Zylinderkanal 42. Bei dem Hydrolager 2 handelt es sich also um ein Lager mit invertiertem Wirkprinzip.

Zur Isolation von höherfrequenten Schwingungen des Hydrolagers 2 ist der Steuerkolben 12 mittels des Linearaktors 16 in Zylinderlängsrichtung Z gesteuert auslenkbar. Bei dem Linearaktor 16 handelt es sich vorzugsweise um einen elektromagnetischen Linearaktor. Andere Linearaktoren sind aber auch möglich. Wird im Fall eines elektromagnetischen Linearaktors der Stator 18 bestromt, führt dies zu einer Relativbewegung des Ankers 20, so dass der Steuerkolben 12 in Zylinderlängsrichtung Z ausgelenkt wird. Mittels des Linearaktors 16 kann der Steuerkolben 12 also in Zylinderlängsrichtung Z verschoben werden, wobei der Steuerkolben 12 auf einer radial innenseitigen Zylindergleitfläche 50 des Zylinderkanals 42 gleitet. Mit der Verschiebung des Steuerkolbens 12 kommuniziert der Steuerkolben 12 hydraulisch sowohl mit der Arbeitskammer 4 als auch mit der Druckkammer 46. Diese Kommunikation wird verwendet, um in der Arbeitskammer 4 Schwingungen anzuregen, die von außen angeregte, hochfrequente Schwingungen isolieren.

### Bezugszeichenliste

### (Teil der Beschreibung)

- L: Längsrichtung
- Z: Zylinderlängsrichtung
- 2: Hydrolager
- 4: Arbeitskammer
- 6: Ausgleichskammer
- 8: Trennwand
- 10: Drosselkanal
- 12: Steuerkolben
- 14: Arbeitskammervolumen
- 16: Linearaktor
- 18: Stator
- 20: Anker
- 24: Steuerkanal
- 26: Rollmembran
- 28: radial innenseitige Kante
- 30: radial außenseitige Kante
- 36: Tragfeder
- 38: Abdeckung
- 40: Basisgehäuse
- 42: Zylinderkanal
- 44: Gleitlager
- 46: Druckkammer
- 48: Ausgleichskanal
- 50: Zylindergleitfläche

## Patentansprüche

1. Hydrolager (2) mit
- einer Tragfeder (36),
- einer von der Tragfeder (36) zumindest teilweise umfassten Arbeitskammer (4), die mit einer Hydraulikflüssigkeit gefüllt ist,
- einer Ausgleichskammer (6), und
- einem zwischen der Arbeitskammer (4) und der Ausgleichskammer (6) ausgebildeten Drosselkanal (10) zum Austausch von Hydraulikflüssigkeit,
**gekennzeichnet durch**
- eine Druckkammer (46),
- einen sich zwischen der Druckkammer (46) und der Arbeitskammer (4) erstreckenden Zylinderkanal (42),
- einen in den Zylinderkanal (42) eingesetzten Steuerkolben (12), der in dem Zylinderkanal (42) in einer zugehörigen Zylinderlängsrichtung Z gleitend verschiebbar ist, und
- einen Aktor (16) zum gesteuerten Auslenken des Steuerkolbens (12) in Zylinderlängsrichtung Z.

2. Hydrolager (2) nach dem vorhergehenden Anspruch,
wobei der Zylinderkanal (42) radial innenseitig eine Zylindergleitfläche (50) aufweist, auf der der Steuerkolben (12) in Zylinderlängsrichtung Z des Zylinderkanals (42) gleiten kann.

3. Hydrolager (2) nach einem der vorhergehenden Ansprüche,
wobei die Druckkammer (46) mit Hydraulikflüssigkeit gefüllt ist.

4. Hydrolager (2) nach einem der vorhergehenden Ansprüche,
wobei zwischen einem radial außenseitigen Mantel des Steuerkolbens (12) und der Zylindergleitfläche (50) des Zylinderkanals (42) ein Spalt, insbesondere ein Ringspalt, ausgebildet ist.

5. Hydrolager (2) nach einem der vorhergehenden Ansprüche,
wobei der Steuerkolben (12) und der Zylinderkanal (42) ein dichtendes Gleitlager (44) bilden.

6. Hydrolager (2) nach einem der vorhergehenden Ansprüche, **gekennzeichnet durch** eine Pufferkammer und einen zwischen der Druckkammer (46) und der Pufferkammer ausgebildeten Ausgleichskanal (48) zum Austausch von Hydraulikflüs sigkeit.

7. Hydrolager (2) nach dem vorhergehenden Anspruch,
wobei die Pufferkammer von der Ausgleichskammer (6) gebildet ist.

8. Hydrolager (2) nach dem vorhergehenden Anspruch,
wobei das Hydrolager (2) einen der Arbeitskammer (4) zugeordneten Steuerkanal (24) aufweist, der zu einem von der Druckkammer (46) abgewandten Ende des Zylinderkanals (42) führt.

9. Kraftfahrzeug mit
- einem Fahrzeugrahmen,
- einem Motor und
- einem Motorlager, das eine lagernde Verbindung zwischen dem Motor und dem Fahrzeugrahmen herstellt,
**dadurch gekennzeichnet, dass**
- das Motorlager durch ein Hydrolager (2) nach einem der vorhergehenden Ansprüche 1 bis 8 ausgebildet ist.

## Claims

1. Hydraulic mount (2) having
- a load-bearing spring (36),
- a working chamber (4) which is at least partially surrounded by the load-bearing spring (36) and which is filled with a hydraulic fluid,
- a compensation chamber (6), and
- a throttle channel (10) which is formed between the working chamber (4) and the compensation chamber (6) and which serves for the exchange of hydraulic fluid,
**characterized by**
- a pressure chamber (46),
- a cylinder channel (42) which extends between the pressure chamber (46) and the working chamber (4),
- a control piston (12) which is inserted into the cylinder channel (42) and which is displaceable in sliding fashion in the cylinder channel (42) in an associated cylinder longitudinal direction Z, and
- an actuator (16) for the controlled deflection of the control piston (12) in the cylinder longitudinal direction Z.

2. Hydraulic mount (2) according to the preceding claim,
wherein the cylinder channel (42) has, radially on the inside, a cylinder sliding surface (50) on which the control piston (12) can slide in the cylinder longitudinal direction Z of the cylinder channel (42) .

3. Hydraulic mount (2) according to any one of the preceding claims,
wherein the pressure chamber (46) is filled with hydraulic fluid.

4. Hydraulic mount (2) according to any one of the preceding claims,
wherein a gap, in particular an annular gap, is formed between a radially outer shell of the control piston (12) and the cylinder sliding surface (50) of the cylinder channel (42).

5. Hydraulic mount (2) according to any one of the preceding claims,
wherein the control piston (12) and the cylinder channel (42) form a sealing plain bearing (44).

6. Hydraulic mount (2) according to any one of the preceding claims, **characterized by** a buffer chamber and a compensation channel (48) which is formed between the pressure chamber (46) and the buffer chamber and which serves for the exchange of hydraulic fluid.

7. Hydraulic mount (2) according to the preceding claim,
wherein the buffer chamber is formed by the compensation chamber (6).

8. Hydraulic mount (2) according to the preceding claim,
wherein the hydraulic mount (2) has a control channel (24) which is assigned to the working chamber (4) and which leads to an end of the cylinder channel (42) which is averted from the pressure chamber (46).

9. Motor vehicle having
- a vehicle frame,
- an engine and
- an engine mount which produces a bearing connection between the engine and the vehicle frame,
**characterized in that**
- the engine mount is formed by a hydraulic mount (2) according to any one of the preceding Claims 1 to 8.

## Revendications

1. Palier hydraulique (2) comprenant
- un ressort de support (36),
- une chambre de travail (4) qui est au moins partiellement entourée par le ressort de support (36) et qui est remplie d'un fluide hydraulique,
- une chambre de compensation (6), et
- un conduit d'étranglement (10) formé entre la chambre de travail (4) et la chambre de compensation (6) et destiné à l'échange de fluide hydraulique, **caractérisé par**
- une chambre de pression (46),
- un conduit de cylindre (42) s'étendant entre la chambre de pression (46) et la chambre de travail (4),
- un piston de commande (12) inséré dans le conduit de cylindre (42) et déplaçable de manière coulissante dans le conduit de cylindre (42) dans une direction de cylindre longitudinale associée Z, et
- un actionneur (16) destiné à dévier de manière commandée le piston de commande (12) dans la direction de cylindre longitudinale Z.

2. Palier hydraulique (2) selon la revendication précédente,
le conduit de cylindre (42) comportant du côté radialement intérieure une surface de coulissement de cylindre (50) sur laquelle le piston de commande (12) peut coulisser dans la direction de cylindre longitudinale Z du conduit de cylindre (42).

3. Palier hydraulique (2) selon l'une des revendications précédentes, la chambre de pression (46) étant remplie de fluide hydraulique.

4. Palier hydraulique (2) selon l'une des revendications précédentes,
un intervalle, en particulier un intervalle annulaire, étant ménagé entre une chemise radialement extérieure du piston de commande (12) et la surface de coulissement de cylindre (50) du conduit de cylindre (42) .

5. Palier hydraulique (2) selon l'une des revendications précédentes,
le piston de commande (12) et le conduit de cylindre (42) formant un palier lisse d'étanchéité (44).

6. Palier hydraulique (2) selon l'une des revendications précédentes, **caractérisé par** une chambre tampon et un conduit de compensation (48) formé entre la chambre de pression (46) et la chambre tampon et destiné à l'échange de fluide hydraulique.

7. Palier hydraulique (2) selon la revendication précédente,
la chambre tampon étant formée par la chambre de compensation (6).

8. Palier hydraulique (2) selon la revendication précédente,
le palier hydraulique (2) comportant un conduit de commande (24) associé à la chambre de travail (4) et menant à une extrémité du conduit de cylindre (42) qui est dirigée à l'opposé de la chambre de pression (46).

9. Véhicule automobile comprenant
- un châssis de véhicule,
- un moteur et
- un palier de moteur qui réalise une liaison palier entre le moteur et le châssis du véhicule,
**caractérisé en ce que**
- le palier moteur est formé par un palier hydraulique (2) selon l'une des revendications précédentes 1 à 8.
